# EUROPÄISCHE PATENTSCHRIFT

(11) **EP 1 129 625 B1**
(45) Veröffentlichungstag und Bekanntmachung des Hinweises auf die Patenterteilung: **24.01.2007**
(21) Anmeldenummer: 01101507.0
(22) Anmeldetag: 24.01.2001
(51) Int. Cl.: A23G 7/02

(54) **Kühltunnel für Süsswarenstücke**
Cooling tunnel for confectionery
Tunnel de refroidissement pour confiseries

(30) Priorität: 03.02.2000 DE 10004754
(43) Veröffentlichungstag der Anmeldung: 05.09.2001
(73) Patentinhaber: Sollich KG, 32105 Bad Salzuflen (DE)
(72) Erfinder: Heyde, Hans, 49134 Wallenhorst (DE)
(74) Vertreter: Rehberg Hüppe + Partner

(56) Entgegenhaltungen:
- EP-A- 0 395 897
- DE-A- 3 325 007
- DE-A- 19 607 055
- GB-A- 202 634
- GB-A- 997 116

## Beschreibung

Die Erfindung betrifft einen Kühltunnel für Süßwarenstücke, die insbesondere einen Produktkern und einen Überzug aus einer insbesondere vorkristallisierten Masse, beispielsweise Schokolade, aufweisen, mit den im Oberbegriff des Patentanspruchs angegebenen Merkmalen. Solche Kühltunnel weisen eine Oberkühlung und eine Bodenkühlung auf. Im Bereich der Oberkühlung wird oft Kühlluft eingesetzt, wobei die Wärme von den Süßwarenstücken durch Strahlung und/oder Konvektion abgezogen wird. Im Bereich der Bodenkühlung wird oft eine Kühlflüssigkeit eingesetzt, die durch eine Kühlplatte geleitet wird. Als Kühlflüssigkeit wird ein Wasser/Glycol-Gemisch oder ein Kältemittel verwendet.

Ein Kühltunnel der eingangs beschriebenen Art ist aus der DE 196 07 055 bekannt. Auch dieser Kühltunnel für Süßwarenstücke weist ein angetriebenes Transportband auf, auf dem die Süßwarenstücke liegend in Bandlaufrichtung durch den Kühltunnel gefördert werden. Der Kühltunnel ist je nach der gewünschten bzw. erforderlichen Länge abschnittsweise aufgebaut. Er weist einen von einer Isolierplatte und einer Haube umschlossenen Behandlungsquerschnitt für die Süßwarenstücke auf. Es ist eine Oberkühlung vorgesehen, die oberhalb des Transportbandes wirksam wird und einen von einer Kühlluft durchströmten Kanal aufweist. Die Oberkühlung besitzt in Bandlaufrichtung mindestens drei Kühlzonen. Die im Mittelbereich des Kühltunnels angeordnete Kühlzone ist eine Absorptionskühlzone. Die im Auslaufbereich des Kühltunnels angeordnete Kühlzone ist eine Konvektionskühlzone.

Unterhalb des Transportbandes ist eine Bodenkühlung für die Süßwarenstücke wirksam, die eine von einer Kühlflüssigkeit durchströmte Kühlplatte aufweist.

Bei derartigen Kühltunneln ist die Kühlplatte unmittelbar auf der Isolierplatte angeordnet. Die Isolierplatte besteht in der Regel aus Polyurethan oder einem anderen Kunststoff. Die Kühlplatte weist zwei Bleche auf, die rundum miteinander verbunden, insbesondere verschweißt sind. Auch über die Fläche sind die beiden Bleche in Abständen miteinander verbunden. Der so gebildete Innenraum der Kühlplatte wird von der Kühlflüssigkeit durchströmt. Es versteht sich, dass auch diesbezüglich der Kühltunnel abschnittsweise aufgebaut ist. Über die Länge des Kühltunnels ergeben sich abschnittsweise zu beiden Seiten zwischen den Isolierplatten und den Kühlplatten Schlitze, durch die Schmutz und Feuchtigkeit eindringen kann. Es können sich dort Keimherde bilden. Eine dauerhaft wirksame Versiegelung der Schlitze ist nicht möglich. Eine Reinigung der Schlitze ist nur bedingt möglich, da die Zugänglichkeit nicht günstig ist. Da auch solche Kühltunnel zunehmend mit Wasser gereinigt werden, besteht die Gefahr, dass das Reinigungswasser in den Schlitz zwischen der Kühlplatte und der Isolierplatte eindringt.

Ein weiterer Kühltunnel ist aus der DE-PS 23 22 918 bekannt. Auch dieser Kühltunnel ist in mehrere Abschnitte unterteilt, die hintereinander in Bandlaufrichtung angeordnet sind. Durch den Kühltunnel wird ein Transportband geführt, auf dem die Süßwarenstücke aufliegen und während ihres Durchlaufes gekühlt werden. Der Kühltunnel besitzt eine Oberkühlung, also eine Kühlung, die in dem Bereich oberhalb der Ebene des Transportbandes wirksam wird und mit der die Süßwarenstücke von oben gekühlt werden. Weiterhin besitzt der Kühltunnel eine Bodenkühlung, die unterhalb der durch das Transportband festgelegten Ebene wirksam wird und mit der durch das Transportband hindurch der Boden der Süßwarenstücke kühlend erfasst wird. Der bekannte Kühltunnel arbeitet im Bereich seiner Oberkühlung mit Kühlluft, ebenso im Bereich der Bodenkühlung.

Aus der GB 997 116 A ist eine Vorrichtung zum Kühlen von Schokoladenmassen bekannt. Die Vorrichtung weist eine tunnelartige Gehäusewandung auf, die eine Kühlkammer umschließt. Auch an den beiden Stirnseiten ist diese Kühlkammer mit einstellbaren Klappen versehen, um die Kühlkammer so weit wie möglich zu schließen und nur soweit zu öffnen, wie es die Höhe der Süßwarenstücke erfordert. Durch die Kühlkammer wird ein Förderband geführt, auf den die zu kühlenden Süßwarenstücke aufliegen und so liegend durch den Kühltunnel gefördert werden. Es ist eine Oberkühlung und eine unterhalb des Transportbands wirksame Bodenkühlung für die Süßwarenstücke vorgesehen. Die Oberkühlung ist als Strahlungskühlung ausgebildet. Zu diesem Zweck sind die Strahlung umlenkende Reflektoren in der Kühlkammer aufgehängt. Die in der abgeschlossenen Kühlkammer vorhandene Luft wird mit Hilfe eines Gebläses langsam umgewälzt. Parallel zu den Seitenwänden des Kühltunnels sind von Kühlflüssigkeit durchflossene Rohre und von einem Kältemittel durchflossene Rohre vertikal übereinander angeordnet, die die Wärme der Süßwarenstücke aufnehmen und abführen. Die Bodenkühlung wird durch eine Kühlplatte verwirklicht, auf der das Transportband aufliegt. Die Kühlplatte besitzt auf Ihrer Unterseite eine Mehrzahl von kühlwasserdurchflossenen Rohren, die mit der Kühlplatte verbunden sind.

Der Erfindung liegt die Aufgabe zugrunde, einen Kühltunnel der eingangs beschriebenen Art bereitzustellen, bei dem im Bereich der Bodenkühlung eine durch eine Kühlplatte strömende Kühlflüssigkeit eingesetzt wird und trotzdem der Gefahr der Keimbildung zwischen Kühlplatte und Isolierplatte entgegengewirkt wird.

Erfindungsgemäß wird dies bei dem Kühltunnel der eingangs beschriebenen Art dadurch erreicht, dass die Kühlplatte im Behandlungsquerschnitt auf Abstandshaltern mit vertikalem Abstand zu der Isolierplatte angeordnet ist und dass zwischen Kühlplatte und Isolierplatte ein als Kanal nutzbarer und/oder zu Reinigungszwecken zugänglicher Freiraum gebildet ist.

Die Erfindung geht von dem Gedanken aus, die Schlitze zwischen Kühlplatte und Isolierplatte grundsätzlich zu vermeiden. Durch den vertikalen Abstand in Verbindung mit der parallelen Anordnung der Kühlplatte auf Abstandshaltern entsteht ein Freiraum zu der Isolierplatte, der nach dem Hochschwenken oder Abnehmen der betreffenden Haube gut zugänglich wird, und zwar nicht nur im Bereich der Randseiten des Kühltunnels, sondern auch in Richtung der Breite des Kühltunnels. Ein solcher Freiraum lässt sich bei Bedarf mühelos und gründlich reinigen. Er kann aber auch vorteilhaft als Kanal für zusätzliche Funktionen genutzt werden. Die im Stand der Technik eingesetzte Versiegelung zwischen Kühlplatte und Isolierplatte entfällt.

Mit dem neuen Kühltunnel wird der unerwartete Vorteil erreicht, dass das Transportband in einer Arbeitshöhe angeordnet werden kann, die der Arbeitshöhe eines Transportbandes eines Kühltunnels entspricht, der im Bereich der Bodenkühlung mit Kühlluft arbeitet. Mit anderen Worten werden damit zwei unterschiedliche Arten von Kühltunneln auf gleiche Arbeitshöhe gebracht, gleichgültig, mit welchem Medium die Bodenkühlung arbeitet. Dies wiederum zieht den Vorteil nach sich, dass die beiden Arten von angesprochenen Kühltunneln noch mehr übereinstimmende Elemente aufweisen. So können jetzt auch gleich dimensionierte Ständer für die beiden Arten der Kühltunnel eingesetzt werden. Dies erbringt herstellungstechnische Vorteile. Der neue Kühltunnel lässt sich zum Kühlen anderer Süßwarenstücke leicht umrüsten und anpassen, auch abschnittsweise. So kann beispielsweise ein erster Abschnitt des Kühltunnels zwecks intensiver Kühlung im Bereich der Bodenkühlung mit einer Kühlflüssigkeit betrieben werden. Ein nachfolgender Abschnitt kann zwecks schonender Kühlung im Bereich der Bodenkühlung auf Kühlluft umgerüstet werden.

Die Dimensionierung des Kühltunnels kann so festgelegt sein, dass die Summe der Höhe des Freiraums und der Kühlplatte der Summe der Höhe eines Kanals und eines Bandtrageblechs eines Kühltunnels mit einer mit Kühlluft arbeitenden Bodenkühlung entspricht. Der Freiraum enthält unter Berücksichtigung der Höhe der Kühlplatte eine solche Dimensionierung, die einem Kühltunnel anderer Art an dieser Stelle entspricht. Bei Kühltunneln, die mit Kühlluft im Bereich der Bodenkühlung arbeiten, findet ein Bandtrageblech Verwendung, auf welchem das Transportband aufruht bzw. gleitet. Unterhalb des Transportbandes bzw. des Bandtragebleches ist ein Kühlkanal vorgesehen, durch den Kühlluft geleitet wird. Wenn nunmehr auch der hier angesprochene Kühltunnel mit einer Bodenkühlung, die eine Kühlflüssigkeit verwendet, entsprechend gestaltet wird, besteht vorteilhaft die Möglichkeit, den Kühltunnel in einfacher Weise umzurüsten oder anzupassen.

Die Kühlplatte kann im Behandlungsquerschnitt auf den Abstandshaltern oder auf Stelzen aufgelagert sein, die auch über die Breite des Freiraums bzw. Kanals verteilt angeordnet sind. Diese Abstandshalter sorgen dafür, dass die Kühlplatte, die aus vergleichsweise dünnem Blech besteht, mit Abstand in einer parallelen Horizontalebene zu der Isolierplatte aufgelagert wird, ohne dass der gebildete Freiraum in seiner Zugänglichkeit nennenswert beeinträchtigt wird. Es ist ohne weiteres möglich, mit einer Spüllanze oder einem anderen Instrument Reinigungswasser in den Freiraum einzubringen und damit dort eine Reinigungswirkung zu erzielen. Es tritt der weitere Vorteil ein, dass auch bei Kühltunneln unterschiedlicher Art, wie angesprochen, das Transportband in übereinstimmender Arbeitshöhe vorgesehen ist und auch die Oberseite der Hauben der unterschiedlichen Kühltunnel in gleicher Höhe vorgesehen ist. Damit werden auch die entsprechenden Querschnitte oberhalb und unterhalb des Transportbandes vereinheitlicht.

Besonders vorteilhaft ist es, wenn der Kanal zwischen Kühlplatte und Isolierplatte als Rücklaufleitung für die Oberkühlung ausgebildet ist. Da in der Oberkühlung Kühlluft verwendet wird, besteht die Möglichkeit, einen großen freien Querschnitt oberhalb des Transportbandes in besonderer Weise auszubilden und zu nutzen, beispielsweise durch die Anordnung verstellbarer Klappen, Absorptionswänden o. dgl.. Der gesamte Querschnitt wird oberhalb des Transportbandes verfügbar. Als Rücklaufleitung kann der Kanal zwischen Platte und Isolierplatte genutzt werden. Es versteht sich, dass in Verbindung damit auch hier die Bodenkühlung über eine Kühlflüssigkeit erfolgt, die durch die Kühlplatte geleitet wird.

Es ist zweckmäßig, wenn in Verbindung damit der Kanal zwischen Kühlplatte und Isolierplatte seitlich offen gestaltet und von der Haube umschlossen ist. Durch die offene Gestaltung wird der Freiraum bzw. Kanal beim Hochschwenken oder Abnehmen der Hauben seitlich frei zugänglich. Andererseits erfolgt die Abdichtung des Freiraums als Kanal durch entsprechende Rippen oder Ansätze im Bereich der Hauben. Für eine Luftführung reicht dies ohne weiteres aus.

Die Erfindung wird anhand eines bevorzugten Ausführungsbeispieles weiter erläutert und beschrieben. Es zeigen:
- **Fig. 1**: einen Vertikalschnitt durch den Kühltunnel in einer Ausführungsform während der Arbeitsstellung,
- **Fig. 2**: einen Vertikalschnitt durch den Kühltunnel gemäß Fig. 1 während der Reinigungsstellung, und
- **Fig. 3**: ein Detail X aus Fig. 1 in vergrößerndem Maßstab.

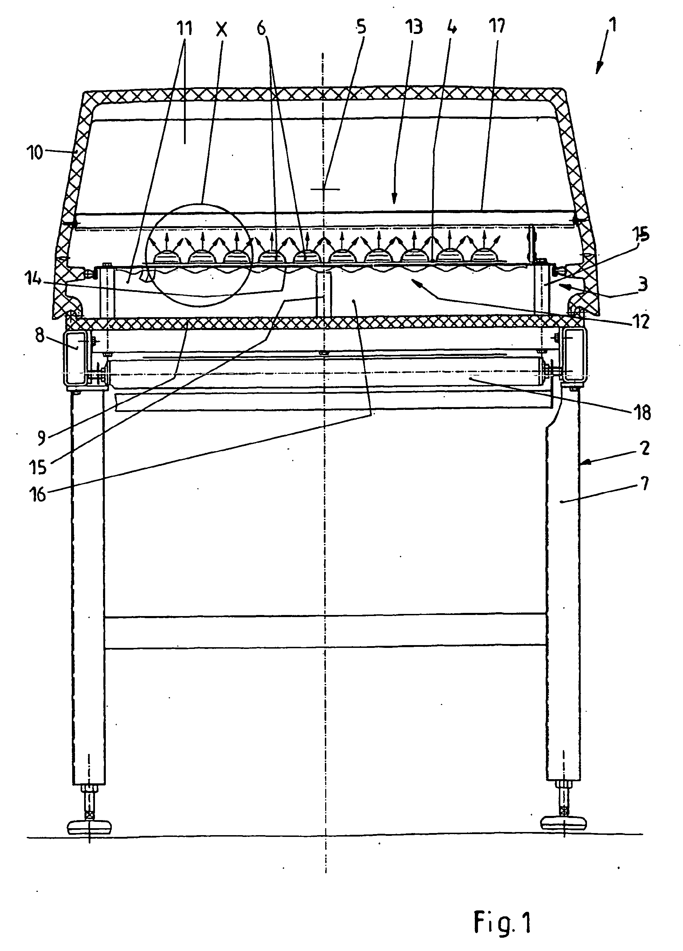

Der in Fig. 1 in schematischer Weise angedeutete Kühltunnel 1 weist einen gestell- oder tischartigen Rahmen 2 auf. Über einen Boden 3 wird ein Transportband 4 in Bandlaufrichtung 5 - senkrecht zur Zeichenebene der Fig. 1 - durch den Kühltunnel 1 geführt, auf dem die Süßwarenstücke 6 aufliegen und während des Durchlaufes durch den Kühltunnel 1 gekühlt werden. Der Rahmen 2 weist im wesentlichen Ständer 7 und Längsträger 8 auf. Auf dem Rahmen 2 ist eine Isolierplatte 9 aufgelagert, die aus Polyurethan bestehen kann. Nach oben wird der Kühltunnel 1 von Hauben 10 abgeschlossen. Die Isolierplatte 9 und die Haube 10 begrenzen einen Behandlungsquerschnitt 11 des Kühltunnels 1. Der Kühltunnel 1 ist in bekannter Weise in Bandlaufrichtung 5, also senkrecht zur Zeichenebene der Fig. 1 segment- oder abschnittsweise unterteilt. Die Hauben 10 sind entsprechend einem Rastermaß in ihrer Länge gestaltet und in der Regel aufklappbar und/oder abnehmbar auf den Rändern der Isolierplatte 9 gelagert, um den Behandlungsquerschnitt 11 des Kühltunnels 1 für Reinigungs-, Wartungs- und Inspektionszwecke leicht zugänglich zu machen. Der Kühltunnel 1 besitzt eine Bodenkühlung 12 und eine Oberkühlung 13. Die Bodenkühlung 12 weist eine Kühlplatte 14 auf, die von einer Kühlflüssigkeit durchströmt wird. Die Kühlplatte 14 besteht aus zwei Blechen, deren Ränder umlaufend miteinander verschweißt sind. Die beiden Bleche sind in über ihre Fläche in Abständen punktförmig miteinander verbunden, so dass auf diese Weise eine Verteilung und Durchmischung der Kühlflüssigkeit im Innenraum der Kühlplatte 14 stattfindet. Als Kühlflüssigkeit kann beispielsweise ein Wasser-Glykol-Gemisch oder ein Kältemittel Verwendung finden. Über das obere, weitgehend ebene Blech der Kühlplatte 14 läuft das Transportband 4 mit den darauf liegenden Süßwarenstücken 6, die so von unten gekühlt werden. Auf diese Weise wird die Bodenkühlung 12 verwirklicht.

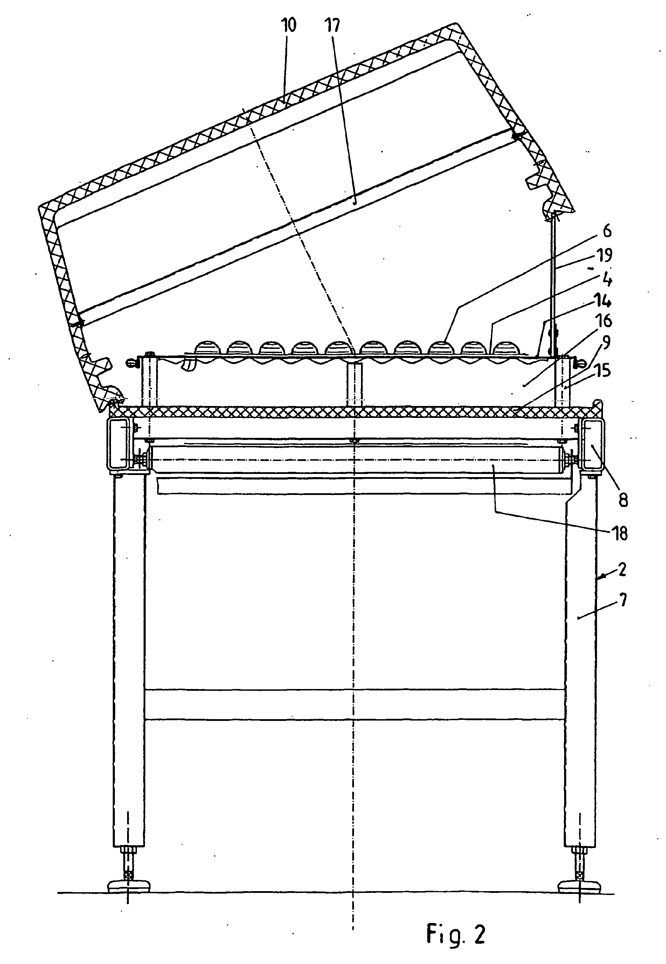

Die Kühlplatte 14 und die Isolierplatte 9 sind mit vertikalem Abstand zueinander angeordnet. Die Kühlplatte 14 ist auf Abstandshaltern 15 aufgelagert, die über die Fläche verteilt angeordnet sein können und die Kühlplatte 14 abstützen. Zwischen der Isolierplatte 9, der Kühlplatte 14 und der betreffenden Haube 10 wird ein Freiraum 16 gebildet. Bei hochgeschwenkter Haube 10 (Fig. 2) ist der Freiraum 16 für Reinigungs-, Wartungs- und Inspektionszwecke leicht zugänglich. Der Freiraum 16 kann aber auch als Rückleitungskanal für Kühlluft der Oberkühlung 13 genutzt werden. Auch in diesem Fall ist die Zugänglichkeit für Reinigungs-, Wartungs- und Inspektionszwecke nicht beeinträchtigt.

Die Bemessung und Gestaltung des Freiraums 16 kann so festgelegt sein, dass die Summe der Höhe des Freiraums 16 und der Kühlplatte 14 der Summe der Höhe eines Kanals und eines Bandtrageblechs eines Kühltunnels mit einer mit Kühlluft arbeitenden Bodenkühlung, also eines Kühltunnels anderer Art, entspricht. Dies ist in mehrfacher Hinsicht vorteilhaft: Die Arbeitshöhen der beiden Arten von Kühltunneln stimmen überein, d. h. die Transportbänder 4 befinden sich auf übereinstimmender Höhe. Damit können Tunnelmodule der einen Art mit denjenigen der anderen Art zu einem Kühltunnel kombiniert werden. Auch das Umrüsten von Tunnelabschnitten innerhalb eines bestehenden Kühltunnels ist wesentlich vereinfacht. Für den Anwender ergeben sich erleichterte Reinigungsmöglichkeiten. Für den Hersteller ergibt sich eine serienmäßige Vereinfachung, beispielsweise in der nunmehr übereinstimmenden Höhe der Ständer 7 für Kühltunnel unterschiedlicher Art.

Der Teil des Behandlungsquerschnittes 11 oberhalb der Kühlplatte 14 dient der Oberkühlung 13. Dieser Raum kann durch Trennwände 17 unterteilt sein. Auch Trennklappen können hier angeordnet sein, um die Kühlluft direkt per Konvektion auf die Süßwarenstücke 6 einwirken zu lassen oder die Wärme durch Strahlung per Absorption abzunehmen.

Unterhalb der Isolierplatte 9 ist eine Rollenbahn 18 für die Rückführung des unteren Trums des Transportbandes 4 vorgesehen. Es versteht sich, dass die Tunnelmodule eine Länge in der Größenordnung von 2 m oder auch 3 m aufweisen können. Die Kühlplatten 14 sind durchgehend ausgebildet, d. h. jeder Tunnelmodul weist nur eine Kühlplatte 14 auf. Jeder Tunnelmodul besitzt aber mehrere Hauben 10, um deren Gewicht gering zu halten und das Aufschwenken dadurch zu erleichtern. In der hochgeschwenkten Stellung (Fig. 2) werden die Hauben 10 auf Aufstellem 18 aufgelagert.

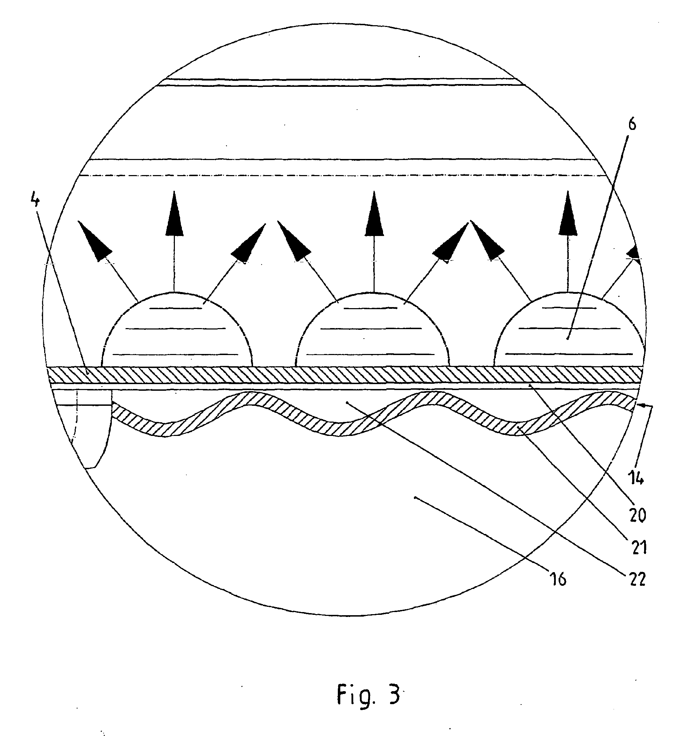

Fig. 3 verdeutlicht den Aufbau der Kühlplatte 14. Es ist deren oberes Blech 20 erkennbar, auf dem das Transportband 4 geführt ist. Das untere Blech 21 der Kühlplatte kann in der dargestellten Weise verformt sein, um so einen rinnenförmigen Querschnitt 22 zu bilden, der von der Kühlflüssigkeit durchströmt wird. Unterhalb des unteren Blechs 21 befindet sich der Freiraum 16.

### BEZUGSZEICHENLISTE

| | | | |
|---|---|---|---|
| 1 | Kühltunnel | 11 | Behandlungsquerschnitt |
| 2 | Rahmen | 12 | Bodenkühlung |
| 3 | Boden | 13 | Oberkühlung |
| 4 | Transportband | 14 | Kühlplatte |
| 5 | Bandlaufrichtung | 15 | Abstandshalter |
| 6 | Süßwarenstücke | 16 | Freiraum |
| 7 | Ständer | 17 | Trennwand |
| 8 | Längsträger | 18 | Rollenbahn |
| 9 | Isolierplatte | 19 | Aufsteller |
| 10 | Haube | 20 | oberes Blech |
| 21 | unteres Blech | | |
| 22 | Querschnitt | | |

## Patentansprüche

1. Kühltunnel für Süßwarenstücke, mit einem angetriebenen Transportband (4), auf dem die Süßwarenstücke (6) liegend in Bandlaufrichtung (5) durch den Kühltunnel (1) gefördert werden, der abschnittsweise einen von einer Isolierplatte (9) und einer Haube (10) umschlossenen Behandlungsquerschnitt (11) für die Süßwarenstücke (6) aufweist, und mit einer oberhalb des Transportbandes (4) wirksamen Oberkühlung (13) und einer unterhalb des Transportbandes (4) wirksamen Bodenkühlung (12) für die Süßwarenstücke (6), wobei die Oberkühlung (13) einen von einer Kühlluft durchströmten Kanal und die Bodenkühlung (12) eine von einer Kühlflüssigkeit durchströmte Kühlplatte (14) aufweist, **dadurch gekennzeichnet, dass** die Kühlplatte (14) im Behandlungsquerschnitt (11) auf Abstandshaltern (15) mit vertikalem Abstand zu der Isolierplatte (9) angeordnet ist und dass zwischen Kühlplatte (14) und Isolierplatte (9) ein als Kanal nutzbarer und/oder zu Reinigungszwecken zugänglicher Freiraum (16) gebildet ist.

2. Kühltunnel nach Anspruch 1, **dadurch gekennzeichnet, dass** die Summe der Höhe des Freiraums (16) und der Kühlplatte (14) der Summe der Höhe eines Kanals und eines Bandtrageblechs eines Kühltunnels mit einer mit Kühlluft arbeitenden Bodenkühlung entspricht.

3. Kühltunnel nach Anspruch 1 oder 2, **dadurch gekennzeichnet, dass** die Abstandshalter (15) auch über die Breite des Freiraums (16) bzw. Kanals verteilt angeordnet sind.

4. Kühltunnel nach Anspruch 1, 2 oder 3, **dadurch gekennzeichnet, dass** der Kanal zwischen Kühlplatte (14) und Isolierplatte (9) als Rücklaufleitung für die Oberkühlung (13) ausgebildet ist.

5. Kühltunnel nach Anspruch 4, **dadurch gekennzeichnet, dass** der Kanal zwischen Kühlplatte (14) und Isolierplatte (9) seitlich offen gestaltet und von der Haube (10) umschlossen ist.

## Claims

1. A cooling tunnel for articles of candy, comprising a driven conveyor belt (4) being designed and arranged to support articles of candy (6) in a lying position and to convey them through the cooling tunnel (1) in the moving direction (5) of the conveyor belt, the cooling tunnel including a treating region (11) for the articles of candy (6), the treating region (11) being surrounded by an insolating plate (9) and by a cover (10), and an upper cooling unit (13) being arranged in a region above the conveyor belt (4), the upper cooling unit (13) including a channel being designed and arranged for cooling air to flow there through; and a bottom cooling unit (12) being arranged in a region below the conveyor belt (4), the bottom cooling unit (12) including a cooling plate (14) being designed and arranged for cooling liquid to flow there through, **characterized in that** the cooling plate (14) in the treating region (11) is designed and arranged to be spaced apart in a vertical direction from the insolating plate (9) by distance elements (15) and **in that** a free space (16) is formed between the cooling plate (14) and the insolating plate (9), the free space to be used as a channel and/or to be accessible for cleaning purposes.

2. The cooling tunnel of claim 1, **characterized in that** the sum of the heights of the free space (16) and of the cooling plate (14) corresponds to the sum of the heights of a channel and of a carrier supporting sheet of a cooling tunnel including a bottom cooling.

3. The cooling tunnel of claim 1 or 2, **characterized in that** the distance elements (15) are arranged to be distributed also over the width of the free space (16) or the channel respectively.

4. The cooling tunnel of claim 1, 2 or 3, **characterized in that** the channel between the cooling plate (14) and the isolating plate (9) is designed as a return conduit of the upper cooling (13) unit.

5. The cooling tunnel of claim 4, **characterized in that** the channel between the cooling plate (14) and the isolating plate (9) is designed to be open in a lateral direction and to be surrounded by the cover (10).

## Revendications

1. Tunnel de refroidissement pour confiseries, comportant une bande de transport (4) entraînée, sur laquelle sont transportées des confiseries (6) en position horizontale dans la direction de défilement de la bande (5) à travers le tunnel de refroidissement (1), qui comporte par zones une section de traitement (11) des confiseries (6), entourée par une plaque d'isolation (9) et un capot (10), et comportant, pour les confiseries (6), un refroidissement supérieur (13), agissant au-dessus de la bande de transport (4), et un refroidissement inférieur (12), agissant au-dessous de la bande de transport (4), le refroidissement supérieur (13) comportant un canal traversé par l'air de refroidissement et le refroidissement inférieur (12) comportant une plaque de refroidissement (14) traversée par un liquide de refroidissement, **caractérisé en ce que** la plaque de refroidissement (14), dans la section de traitement (11), est montée sur des écarteurs (15) à distance verticale de la plaque d'isolation (9) et **en ce qu'**un dégagement (16), apte à être utilisé comme canal et accessible à des fins de nettoyage, est formé entre la plaque de refroidissement (14) et la plaque d'isolation (9).

2. Tunnel de refroidissement selon la revendication 1, **caractérisé en ce que** la somme de la hauteur du dégagement (16) et de la hauteur de la plaque de refroidissement (14) correspond à la somme de la hauteur d'un canal et de la hauteur d'une tôle de support de la bande d'un tunnel de refroidissement avec un refroidissement inférieur travaillant avec de l'air de refroidissement.

3. Tunnel de refroidissement selon la revendication 1 ou 2, **caractérisé en ce que** les écarteurs (15) sont aussi répartis sur la largeur du dégagement (16) ou du canal.

4. Tunnel de refroidissement selon la revendication 1, 2 ou 3, **caractérisé en ce que** le canal est réalisé entre la plaque de refroidissement (14) et la plaque d'isolation (9), sous forme de conduit de recirculation pour le refroidissement supérieur (13).

5. Tunnel de refroidissement selon la revendication 4, **caractérisé en ce que** le canal entre la plaque de refroidissement (14) et la plaque d'isolation (9) est ouvert sur le côté et est entouré par le capot (10).
